# EUROPEAN PATENT SPECIFICATION

(11) **EP 3 956 592 B1**
(45) Date of publication and mention of the grant of the patent: **18.01.2023**
(21) Application number: 19746458.9
(22) Date of filing: 25.07.2019
(51) Int. Cl.: F16L 33/22

(54) **HOSE CONNECTOR**
SCHLAUCHANSCHLUSS
RACCORD POUR TUYAU FLEXIBLE

(30) Priority: 18.04.2019 DE 102019002831
(43) Date of publication of application: 23.02.2022
(73) Proprietor: HUSQVARNA AB, 561 82 Huskvarna (SE)
(72) Inventor: RENNER, Thomas, 89079 Ulm (DE)
(74) Representative: Finkele, Rolf
(86) International application number: PCT/EP2019/070128
(87) International publication number: WO 2020/211961

(56) References cited:
- EP-A1- 2 233 814
- WO-A1-98/01695
- WO-A1-2011/099186
- DE-A1-102006 013 934
- DE-U1-202012 101 020
- US-A- 4 223 919

## Description

### TECHNICAL FIELD

The present disclosure relates to a hose connector, and more particularly to a clamping element of the hose connector.

### BACKGROUND

One of the necessities for home ownership is a hose for watering lawns, washing cars, etc. The hose is connected to a source of water supply such as a tap or a pump so that water can be delivered through the hose. A hose connector allows quick coupling of the hose with the source of water supply. The hose connector typically includes a body, a clamping nut, and a clamping element. Based on tightening of the clamping nut, clamping claws of the clamping element press on to the hose to couple the hose with the hose connector. A holding force between the clamping element and the hose depends on a tightening torque that is applied on the clamping nut. If the tightening torque on the clamping nut reduces, there is a possibility that the hose may slip off from the hose connector during operation.

Also, due to heat-cold-impact, a settling behavior exists between the hose and the clamping claws which in turn reduces the holding force of the clamping claws, thereby causing the hose to slip off from the hose connector. Further, in a situations where the hose is subjected to multiple side pulls, an alternating bending load is exerted on the hose which may cause the hose to slip out of connection. Thus, conventional hose connectors lack functional reliability. Also, some conventional hose connectors include separate movable claws that need to be additionally pushed onto the hose. Such an additional component adds to an overall component cost as well as installation costs which is not desirable.

DE102006013934A1 describes a device with a tube piece having a base at which a connecting piece for a pipe is formed. At the base, a connectable nut and a clamping element are provided. By turning the nut into an attachment direction, the clamping element is movable radially toward the connecting piece. On the clamping element, by means of an edge a force is applied due to a turn of the nut in a release direction. The clamping element is moved away radially outward, from the connecting piece. An independent claim is included for a nut, and a tube piece.

The PCT patent application WO 98/01695 A1 describes a hose connector that also includes a body that consists of a first portion and a second portion disposed concentrically around the first portion and thereby provides a gap that is adapted to receive a hose therein. The clamping element by which force is applied force to a received hose is coupled to the second body portion through a form fit connection.

### SUMMARY

In view of the above, it is an objective of the present invention to solve or at least reduce the drawbacks discussed above. The objective is achieved by a hose connector as defined in claim 1.

A hose connector has a body. The body includes a first body portion and a second body portion disposed concentrically around the first body portion. The first body portion and the second body portion define a gap therebetween such that the gap is adapted to receive a hose therein. The hose connector also includes a clamping element coupled to the second body portion. The clamping element includes a number of clamping claws. The hose connector further includes a clamping nut threadably coupled to the second body portion. The clamping nut includes a tail portion such that in an engaged position of the clamping nut, the tail portion is adapted to apply force on the clamping element.

There are three alternative embodiments of the hose connector that fulfill similar tasks. That is that the clamping element is coupled with the second body portion in a manner such that the clamping element slides on the second body portion in an axial direction relative to the second body portion. Alternatively, the clamping element is coupled with the second body portion in a manner such that the clamping element is coupled with the second body portion through a form-fit connection. With further alternative embodiment the clamping element is coupled with the second body portion in a manner such that the clamping element is hingedly coupled with the second body portion.

The hose connector of the present embodiment eliminates any accidental removal of the hose for the hose connector during operation. The hose connector provides improved holding force between the hose and the clamping element. More particularly, the hose connector is designed such that any accidental pulling of the hose causes the clamping element to move in a direction of the tail portion of the clamping nut thereby causing the clamping claws to automatically contract and apply additional holding force on the hose. Thus, the hose connector of the present invention provides improved functional reliability.

According to an embodiment of the present invention, an inner diameter of the clamping element is slightly greater than an outer diameter of the second body portion at the adjacent region. Such a geometry of the clamping element and the second body portion allows radial tilting of the clamping element. Thus, due to radial mobility of the clamping element, a pull-off force of the hose connector is increased, especially when the hose is pulled sideways.

According to the present invention, a distance defined between the clamping nut and the clamping element is decided such that the clamping element is radially tiltable with respect to the hose connector.

According to the present invention, a ratio between an outer diameter defined by a body of the clamping element and the distance defined between the clamping nut and the clamping element is decided such that the clamping element is radially tiltable with respect to the hose connector. Thus, when the hose is pulled sideways during operation, the radial tilting of the clamping element prevents an accidental release of the hose from the hose connector.

According to an embodiment of the present invention, the clamping element is coupled to the second body portion through a snap fit arrangement.

According to an embodiment of the present invention, the second body portion defines a sliding surface, such that the clamping element is slidably received on the sliding surface thereby allowing an axial movement of the clamping element.

According to an embodiment of the present invention, the sliding surface is defined between a first limiting surface of the second body portion and a second limiting surface of the second body portion.

According to an embodiment of the present invention, a clamping surface of the clamping nut is spaced apart from the clamping element when the clamping nut is coupled with the second body portion.

According to an embodiment of the present invention, a first gap is defined between the clamping element and the hose when the clamping nut is coupled with the second body portion. The first gap allows easy attachment and removal of the hose with the first body portion.

According to an embodiment of the present invention, a value of the first gap lies approximately between 0.75 mm and 1.5 mm.

According to an embodiment of the present invention, the clamping element is molded on the body.

According to an embodiment of the present invention, an injection molding process is used for molding the clamping element on the body.

According to an embodiment of the present invention, at least one of a 2-K injection molding process and an assembly injection molding process is used for molding the clamping element on the body. As the clamping element is manufactured using cost-neutral production techniques, the clamping element does not incur significant manufacturing and installation costs.

According to an embodiment of the present invention, the clamping element and the body are either manufactured as separate components or they become separate components after the molding process. To separate the two components after the molding process on could for example think of adding a separation means already to the molding tool, having a discrete separation tool or have the user of the hose connector to do the separation by actively braking a bond between the two.

According to an embodiment of the present invention, the clamping element is connected to the second body portion by a plurality of internal hinges.

According to an embodiment of the present invention, a material of the body is different from a material of the clamping element.

According to an embodiment of the present invention, a length of the second body portion is greater than a length of the clamping nut such that the first body portion (106) is extending outward of the clamping nut into the free space when the clamping nut threadably coupled to the second body portion. Such a feature of the second body portion and the clamping nut provides kink protection and also allows centering of the hose.

According to an embodiment of the present invention, the clamping element includes at least one teeth. The teeth press on the hose so that the hose does not slip out of connection.

The hose connector allows simplified assembly and disassembly and is simple to use. Additionally, the hose connector reduces disassembly forces of the hose and the hose connector, thus improving a service life of the hose connector.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows an exploded view of a hose connector, in accordance with an embodiment of the present invention;
**FIG. 2** shows a sectional view of a portion of the hose connector, in accordance with an embodiment of the present invention;
**FIG. 3** shows a sectional view of a portion of the hose connector illustrating a hose coupled to the hose connector, in accordance with an embodiment of the present invention;
**FIG. 4** shows a sectional view of the hose connector illustrating the hose clamped by a clamping element of the hose connector, in accordance with an embodiment of the present invention;
**FIG. 5** shows a sectional view of a body, a clamping nut, and the clamping element of the hose connector, in accordance with an embodiment of the present invention;
**FIG. 6** shows a sectional view of the hose connector illustrating the clamping element in a radially tilted position, in accordance with an embodiment of the present invention;
**FIG. 7** is a sectional view of the hose connector, in accordance with an embodiment of the present invention;
**FIG. 8** is a perspective view illustrating another embodiment for connection of a second body portion and a clamping element of a hose connector, in accordance with an embodiment of the present invention;
**FIGS. 9** and **10** are perspective views illustrating connection of the second body portion with the clamping element shown in **FIG. 8****,** in accordance with an embodiment of the present invention
**FIG. 11** is a perspective view illustrating yet another embodiment for connection of a second body portion and a clamping element of a hose connector; and
**FIG. 12** is a sectional view illustrating connection of the second body portion with the clamping element shown in **FIG. 11****,** in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

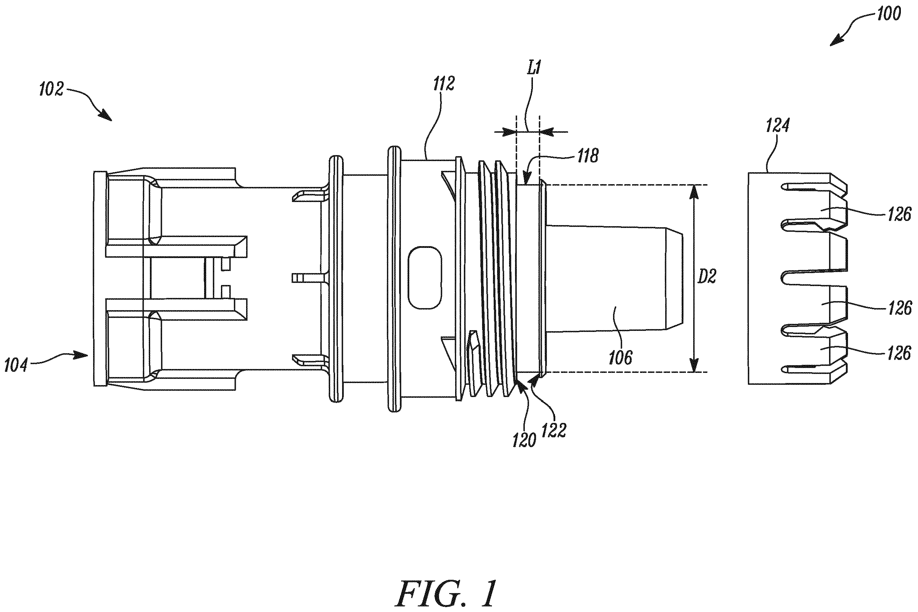

**FIG. 1** shows an exploded view of a hose connector **100,** according to an embodiment of the present invention. The hose connector **100** may be coupled with a water supply source (not shown) for performing a watering operation. For example, the water supply source may include a tap or a pump outlet. The hose connector **100** includes a body **102.** The body **102** defines a first end **104** that may be detachably coupled with the water supply source. The first end **104** may be generally tubular in shape. In one example, the first end **104** may include internal threads (not shown) that engage with external threads (not shown) on the water supply source for detachably coupling the hose connector **100** with the source of water supply. In an alternate example, the hose connector **100** may be press fitted to the water supply source, without any limitations.

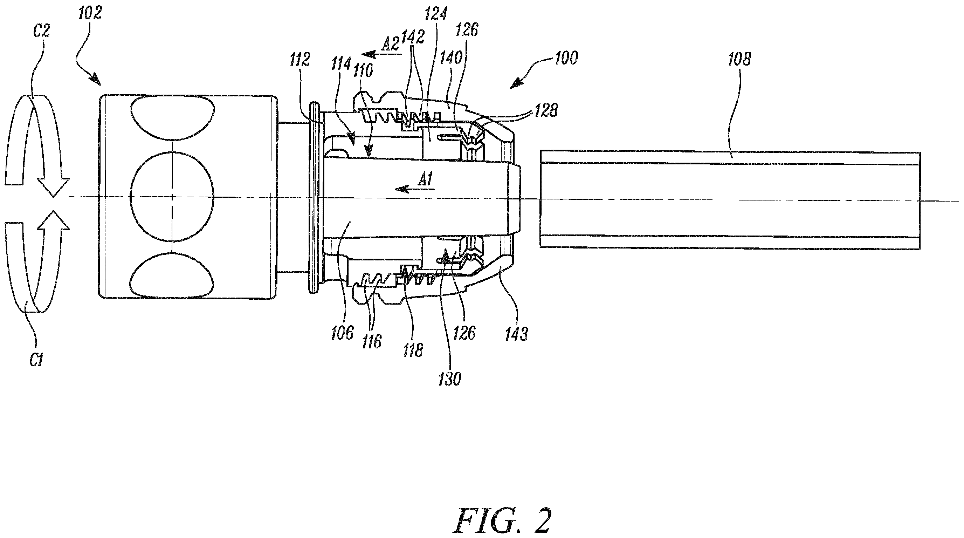

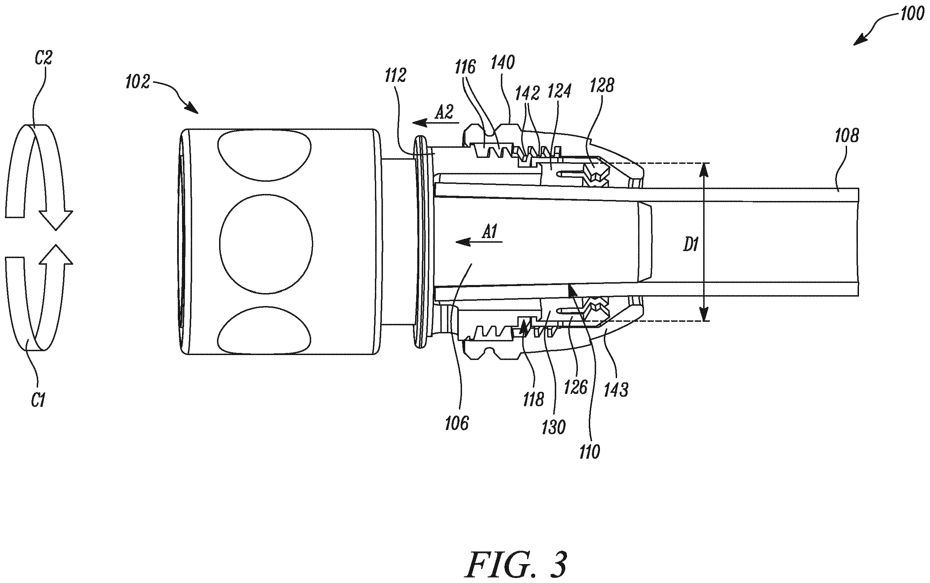

The body **102** includes a first body portion **106.** As shown in **FIGS. 2** and **3****,** the first body portion **106** has a tubular shape. The first body portion **106** defines a fluid passage (not shown) that allows water from the water supply source to be introduced in a hose **108** that connects with the hose connector **100.** The hose **108** is received by the first body portion **106** such that the hose **108** contacts an outer surface **110** (shown in **FIG. 1**) of the first body portion **106.** Further, the body **102** includes a second body portion **112.** The second body portion **112** is disposed concentrically around the first body portion **106.** More particularly, the first and second body portions **106, 112** are provided such that a gap **114** (shown in **FIG. 1**) is defined between the first and second body portions **106, 112.** The hose **108** is received within the gap **114** defined between the first and second body portions **106, 112.**

Further, the second body portion **112** has an annular shape. The second body portion **112** defines a number of external threads **116.** Additionally, the second body portion **112** defines a sliding surface **118** disposed adjacent to the number of external threads **116.** The sliding surface **118** is defined between a first limiting surface **120** (shown in **FIG. 1**) of the second body portion **112** and a second limiting surface **122** (shown in **FIG. 1**) of the second body portion **112.** The sliding surface **118** defines a length "**L1**" between the first and second limiting surfaces **120, 122.** It should be noted that the sliding surface **118,** the first limiting surface **120,** and the second limiting surface **122** are defined along a circumference of the second body portion **112.** In an advantageous embodiment the diameter of the clamping element **124** is significantly greater than the length **L1** of the sliding surface **122,** for example by a factor of 5 to 20, preferably 10 to 15, this has positive effects on the relative radial movement of the clamping element **124** in respect to the second body portion **112.**

The hose connector **100** includes a clamping element **124.** The clamping element **124** includes a number of clamping claws **126.** Further, the clamping claws **126** include one or more teeth **128** that are defined on an inner surface **130** of the respective clamping claws **126.** The teeth **128** apply pressure on the hose **108** so that the hose **108** does not slip out of connection. In the illustrated embodiment, each clamping claw **126** includes two teeth **128.** Alternatively, each clamping claw **126** may include more than two teeth, without any limitations.

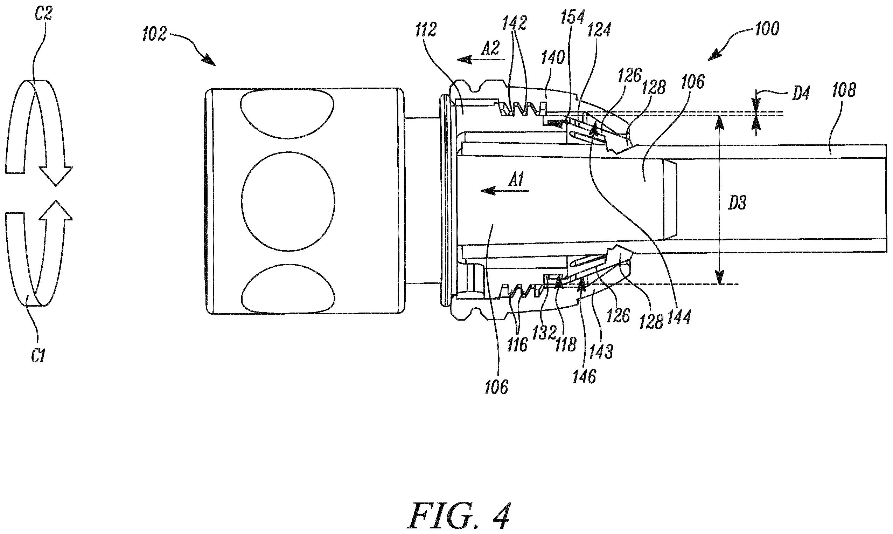

Referring to **FIGS. 3** and **4****,** the clamping element **124** is associated with the second body portion **112** such that the clamping element **124** is movable relative to the second body portion **112.** **FIG. 3** illustrates an open configuration of the hose connector **100** and **FIG. 4** illustrates a closed configuration of the hose connector **100.** In one example, the clamping element **124** is coupled to the second body portion **112** through a snap fit arrangement. Further, in an embodiment, the clamping element **124** is associated with the second body portion **112** such that it slides on the second body portion **112** in an axial direction "**A1**" relative to the second body portion **112.** The clamping element **124** is coupled to the second body portion **112** such that the clamping element **124** is slidable along an axis defined by the direction "**A1**" (see **FIG. 4**) on the second body portion **112** with respect to the second body portion **112.** More particularly, the clamping element **124** is slidably received on the sliding surface **118** thereby allowing an axial movement of the clamping element **124.** As shown, the clamping element **124** is slidable between the first and second limiting surfaces **120, 122** (see **FIG. 1****)** of the second body portion **112.** In one example, the clamping element **124** may be slidable by a distance of approximately 2 mm with respect to the second body portion **112.**

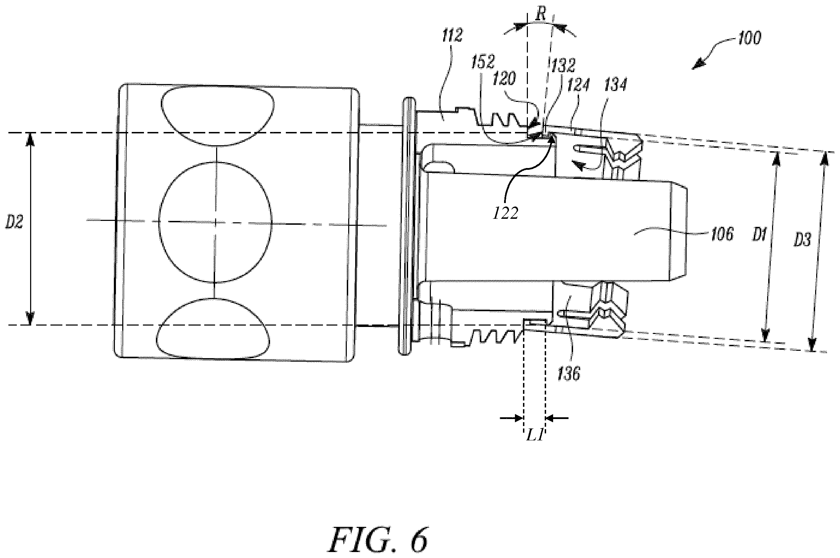

As shown in **FIG. 6****,** the clamping element **124** includes a protrusion **132** extending from the clamping element **124.** More particularly, the protrusion **132** extends from an inner surface **134** defined by a body **136** of the clamping element **124** inwardly towards the second body portion **112** such that the protrusion **132** and the body **136** together define an L-shape. In one example, during the axial movement of the clamping element **124,** a bottom surface of the protrusion **132** contacts the sliding surface **118.** In another embodiment, a height of the protrusion **132** is lesser than a height of the second limiting surface **122** such that the protrusion **132** does not contact the sliding surface **118** during the axial movement of the clamping element **124.** However, in this embodiment, the inner surface **134** defined by the body **136** of the clamping element **124** is in sliding contact with the second body portion **112.** Further, during the axial movement of the clamping element **124,** side surfaces **152, 154** of the protrusion **132** move towards the first and second limiting surfaces **120, 122** (shown in **FIG. 1****)** respectively.

Additionally, the clamping element **124** is radially tiltable by an angle "**R**" with respect to the second body portion **112.** The angle "**R**" may be defined between the first limiting surface **120** and the side surface **152** defined by the protrusion **132** of the clamping element **124.** More particularly, an inner diameter "**D1**" defined by the body **136** of the clamping element **124** is slightly greater than an outer diameter **"D2"** of the second body portion **112.** Additionally, a ratio between an outer diameter **"D3"** of the clamping element **124** and a distance "**D4**" (shown in **FIG. 4**) is decided such that the clamping element **124** is radially tiltable by the angle "**R**" with respect to the hose connector **100.** Such a geometry of the clamping element **124** and the second body portion **112** allows radial tilting of the clamping element **124** with respect to the second body portion **112.**

In one example, the clamping element **124** is molded on the body **102.** For example, an injection molding process may be used for molding the clamping element **124** on the hose connector **100.** Alternatively, a 2-K injection molding process or an assembly injection molding process may be used for molding the clamping element **124** on the hose connector **100.** In other examples, the clamping element **124** and the hose connector **100** may be manufactured as separate components that are coupled with each other at a later stage of assembly. As the clamping element **124** is manufactured using cost efficient techniques, the hose connector **100** does not incur significant component production costs. Additionally, installation costs and time associated with the assembly and disassembly of the clamping element **124** with the body **102** is reduced as the clamping element **124** is molded with the body **102.** Further, a material of the body **102** may be different from a material of the clamping element **124.** In an example, the clamping element **124** may be made of polyoxymethylene whereas the body **102** may be made of polypropylene, without any limitations.

Referring now to **FIGS. 2** and **3****,** the hose connector **100** includes a clamping nut **140.** The clamping nut **140** defines a clamping surface **144.** The clamping nut **140** is threadably coupled to the second body portion **112.** More particularly, the clamping nut **140** includes a number of internal threads **142** that engage with the number of external threads **116** on the second body portion **112** to threadably couple the clamping nut **140** with the second body portion **112.** Based on a rotation of the clamping nut **140** in a threading direction **"A2",** the clamping nut **140** may be coupled or decoupled from the second body portion **112.**

The clamping nut **140** is shown in an engaged position in **FIG. 4** and in a disengaged position in **FIGS. 2** and **3****.** The clamping nut **140** is said to be in the engaged position when the internal threads **142** of the clamping nut **140** engage with the external threads **116** on the second body portion **112.** The clamping element **124** is disposed within the clamping nut **140** in the engaged position of the clamping nut **140.** The clamping nut **140** includes a tail portion **143.** When the clamping nut **140** is in the engaged position, the tail portion **143** applies a force on the clamping element **124.**

As shown in **FIG. 4****,** in the engaged position of the clamping nut **140,** the clamping surface **144** of the clamping nut **140** is spaced apart from an outer surface **146** of the clamping element **124** such that the distance "**D4**" is defined therebetween. The distance "**D4**" provides some space so that the clamping element **124** can tilt radially. Additionally, in one example, the distance **"D4"** increases a force of the snap connection between the clamping element **124** and the second body portion **112** thereby providing an additional positive connection to the snap connection. Further, a stroke of the clamping nut **140** is greater than a stroke of the clamping element **124.** Thus, in the disengaged position of the clamping nut **140** and when the clamping element **124** is disengaged from the hose **108,** the hose **108** can be easily pushed or removed from the first body portion **106** as there is no self-reinforcing effect of the clamping element **124.** Further, dimensions of the clamping nut **140,** the clamping element **124,** and the first body portion **106** is decided such that in a maximum tightened condition of the clamping nut **140,** a first gap **148** exists between the clamping element **124** and the hose **108.** In some examples, a value of the first gap **148** lies approximately between 0.75 mm and 1.5 mm. In one example, the value of the first gap **148** is approximately equal to 1 mm.

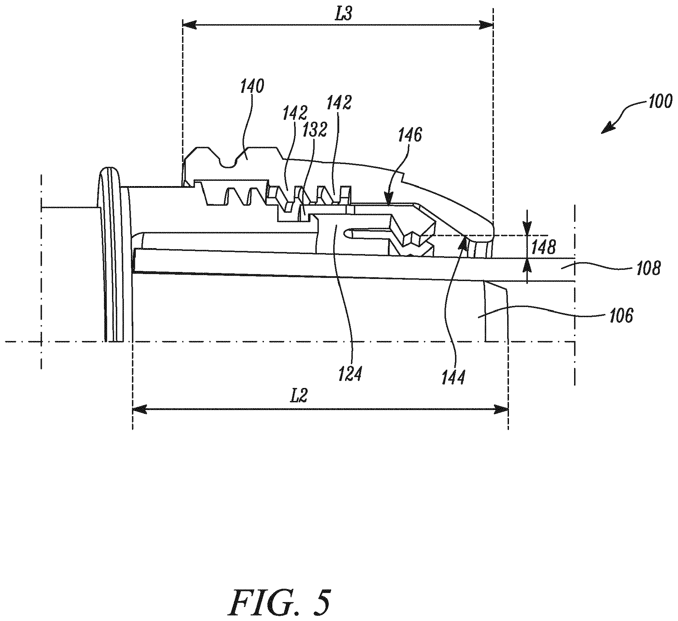

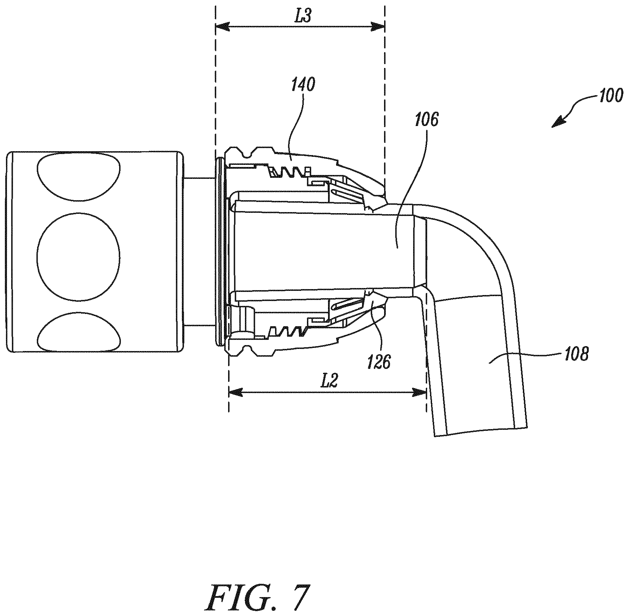

As shown in **FIGS. 5** and **7****,** a length **"L2"** of the first body portion **106** is greater than a length **"L3"** of the clamping nut **140** such that the first body portion (106) is extending outward of the clamping nut **(140, 1140)** into the free space when the clamping nut **(140, 1140)** threadably coupled to the second body portion **(112, 812, 1112).** Thus, the first body portion **106** extends beyond the clamping nut **140,** thereby providing kink protection. Such a design of the first body portion **106** and the clamping nut **140** also prevents slanted attachment of the hose **108** to the hose connector **100** which in turn allows centering of the hose **108.** Further, the centering of the hose **108** reduces a load that is exerted on the clamping claws **126** when the hose **108** is pulled sideways, thereby preventing bending of the clamping claws **126.**

Referring now to **FIGS. 3** and **4****,** for coupling the hose **108** with the hose connector **100,** the hose **108** is received by the first body portion **106.** Further, the clamping nut **140** is threadably coupled with the second body portion **112** by rotating the clamping nut **140** in a clockwise direction "**C1**" along the threading direction **"A2".** As the internal threads **142** of the clamping nut **140** engage with the external threads **116** of the second body portion **112,** the clamping element **124** axially moves towards the first limiting surface **120** (shown in **FIG. 1**) until the protrusion **132** (shown in **FIG. 5**) contacts the first limiting surface **120.** Further engagement of the internal threads **142** and the external threads **116** causes the tail portion **143** of the clamping nut **140** to apply the force on the clamping claws **126.** Thus, the clamping claws **126** are in turn pressed radially inwards towards the hose **108,** thereby applying a holding force on the hose **108.**

Further, when the hose **108** is to be removed, the clamping nut **140** is removed from the second body portion **112** by rotating the clamping nut **140** in a counter clockwise direction **"C2"** opposite to the threading direction **"A2".** More particularly, a disengagement of the clamping nut **140** from the second body portion **112** causes the clamping claws **126** to radially spring back to their original position as the tail portion **143** no longer applies the force on the clamping claws **126.** A spring back action of the clamping claws **126** releases the holding force previously applied by the clamping claws **126** on the hose **108,** thereby allowing easy removal of the hose **108** from the first body portion **106.**

The hose connector **100** disclosed herein provides improved functional reliability as a possibility of any release of the hose **108** during operation is reduced/eliminated. More particularly, the clamping element **124** described herein is embodied as a self-reinforcing component as any pull of the hose **108** causes the clamping element **124** to tilt and/or move against the threading direction **"A2"** of the clamping nut **140** to in turn apply additional holding force on the hose **108.** Additionally, when the hose **108** is pulled sideways during operation, the radial tilting of the clamping element **124** prevents an accidental release of the hose **108** from the hose connector **100.** Further, components of the hose connector **100** do not require any prior assembly or disassembly hence the hose connector **100** allows simplified connection of the hose **108** with the hose connector **100.**

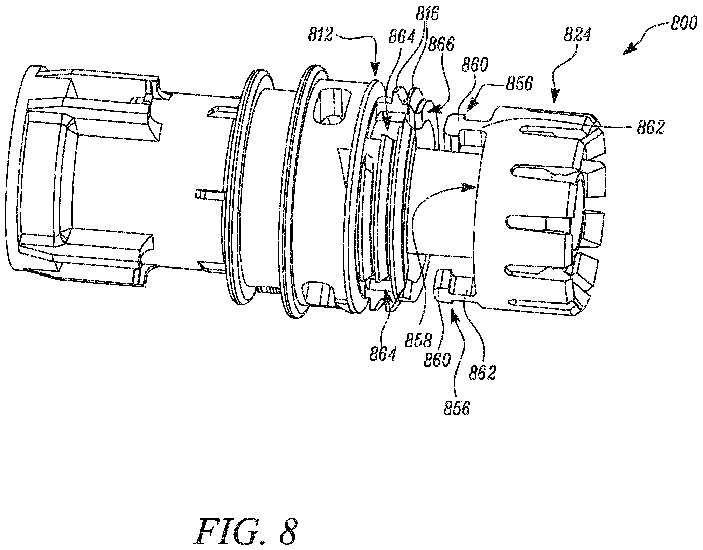

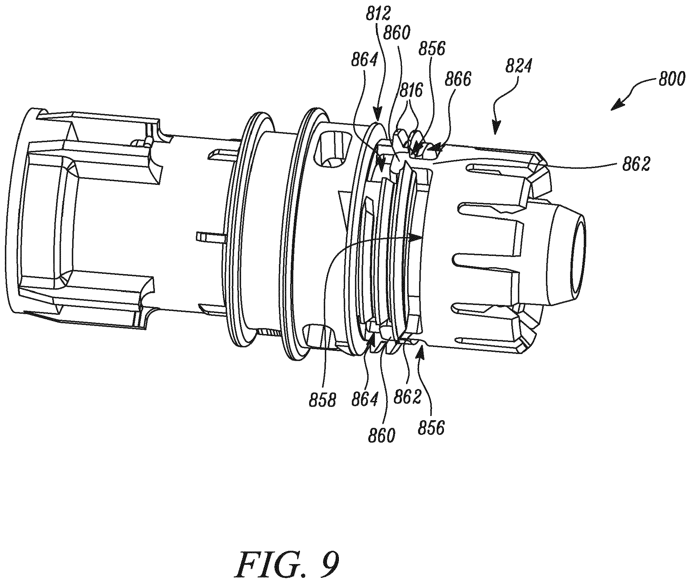

**FIGS. 8****,** **9****,** and **10** illustrate another embodiment of the present disclosure. A hose connector **800** of this embodiment includes a second body portion **812** and a clamping element **824.** As shown in **FIG. 9****,** the clamping element **824** is coupled to the second body portion **812.** More particularly, the clamping element **824** is coupled with the second body portion **812** such that the clamping element **824** is movable relative to the second body portion **812.**

In the illustrated embodiment, the clamping element **824** is coupled with the second body portion **812** through a form-fit connection. The clamping element **824** includes a number of tongue members **856** extending from a side surface **858** defined by the clamping element **824.** In the illustrated example, the clamping element **824** includes three tongue members **856,** without any limitations. Each of the tongue members **856** includes first bar **860** and a second bar **862,** such that the first and second bars **860, 862** are perpendicular to each other and form a T-shape. Further, the second body portion **812** defines a number of openings **864** provided in a portion of the second body portion **812** that includes a number of external threads **816.** More particularly, the second body portion **812** includes three openings **864** corresponding to the number of tongue members **856.**

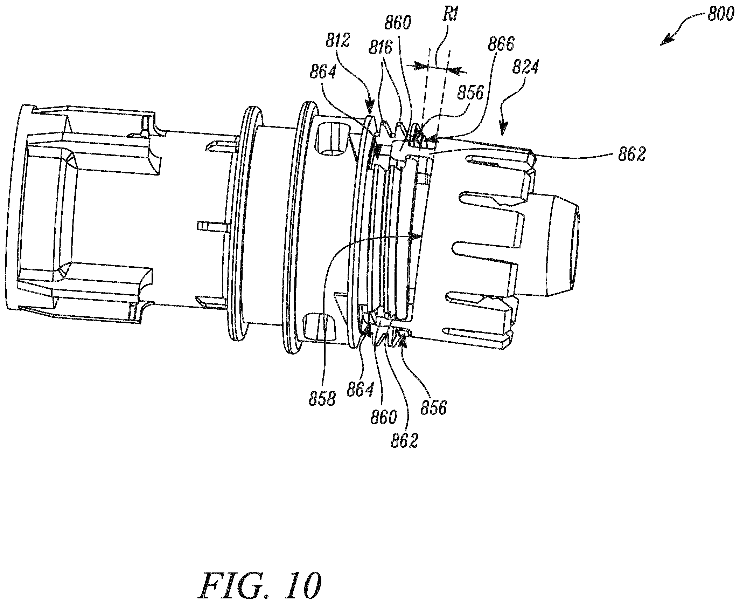

Referring to **FIG. 9****,** when the clamping element **824** is coupled with the second body portion **812,** the tongue members **856** are partially received within the corresponding openings **864.** A shape defined by each of the openings **864** is provided such that the openings **864** receive the first bar **860** and a portion of the second bar **862** of the corresponding tongue member **856,** when the clamping element **824** is coupled with the second body portion **812.** As shown in **FIG. 10****,** owing to the connection between the second body portion **812** and the clamping element **824,** the clamping element **824** is radially tiltable by an angle "**R1**" with respect to the second body portion **812.** The angle "**R1**" may be defined between a surface **866** of the second body portion **812** and the side surface **858** of the clamping element **824.**

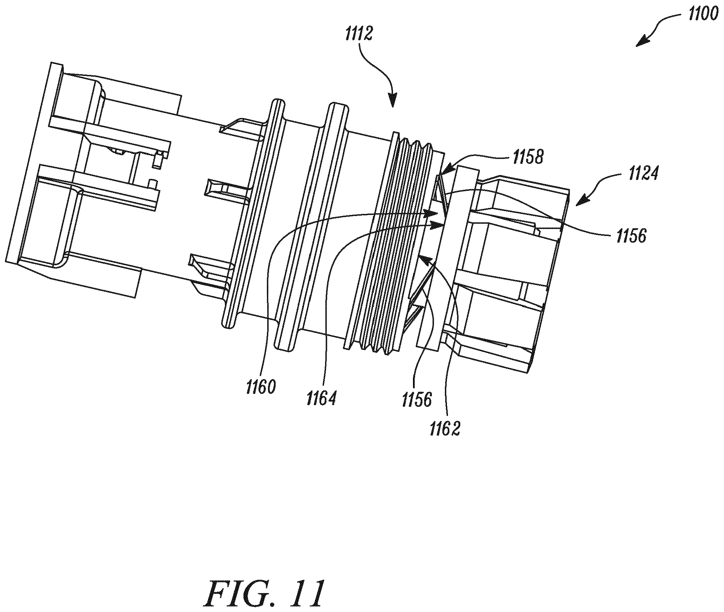

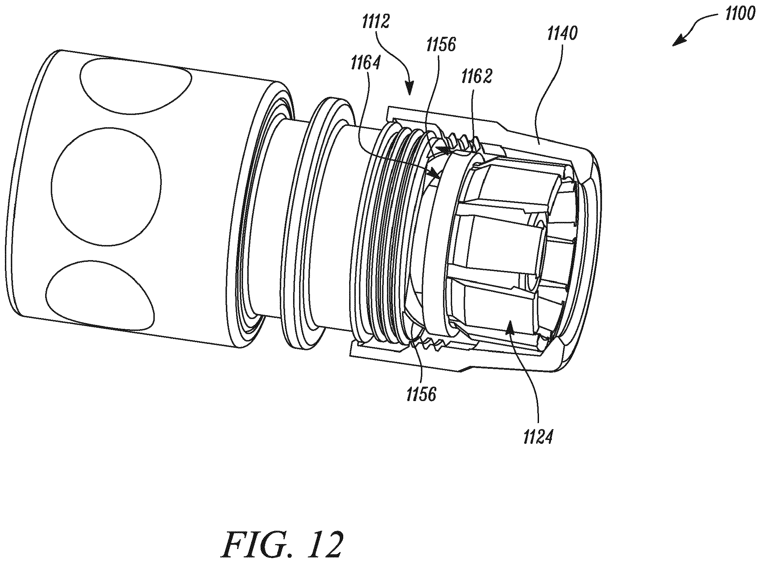

**FIGS. 11** and **12** illustrate yet another embodiment of the present disclosure. A hose connector **1100** of this embodiment includes a second body portion **1112,** a clamping element **1124,** and a clamping nut **1140** (shown in **FIG. 12**). As shown in **FIG. 11****,** the clamping element **1124** is coupled to the second body portion **1112.** More particularly, the clamping element **1124** is coupled with the second body portion **1112** such that the clamping element **1124** is movable relative to the second body portion **1112.**

In the illustrated embodiment, the clamping element **1124** is hingedly coupled with the second body portion **1112.** For example, the clamping element **1124** is hingedly coupled with the second body portion **1112** by a continuous bond connection. More particularly, the hose connector **1100** includes a number of internal hinges **1156.** For example, the hose connector **1100** may include four internal hinges **1156.** A first end **1158** of each of the internal hinges **1156** is connected to the second body portion **1112,** whereas the second end **1160** of each of the internal hinges **1156** is connected to the clamping element **1124.** In an example, a length of each of the internal hinges **1156** may taper from the first end **1158** towards the second end **1160,** such that the internal hinges **1156** are substantially trapezoidal in shape.

The internal hinges **1156** allow movement of the clamping element **1124** with respect to the second body portion **1112.** In one example, the internal hinges **1156** are made of a flexible material, such as plastics, in order to allow movement of the clamping element **1124** with respect to the second body portion **1112.** As shown in **FIG. 12****,** owing to the hinged connection between the second body portion **1112** and the clamping element **1124,** clamping element **1124** is radially tiltable by an angle (not shown) with respect to the second body portion **1112.** The angle may be defined between a surface **1162** of the second body portion **1112** and a side surface **1164** of the clamping element **1124.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Hose Connector
- **102**: Body
- **104**: First End
- **106**: First Body Portion
- **108**: Hose
- **110**: Outer Surface
- **112**: Second Body Portion
- **114**: Gap
- **116**: External Threads
- **118**: Sliding Surface
- **120**: First Limiting Surface
- **122**: Second Limiting Surface
- **124**: Clamping Element
- **126**: Clamping Claws
- **128**: Teeth
- **130**: Inner Surface
- **132**: Protrusion
- **134**: Inner Surface
- **136**: Body
- **140**: Clamping Nut
- **142**: Internal Threads
- **143**: Tail Portion
- **144**: Clamping Surface
- **146**: Outer Surface
- **148**: First Gap
- **152**: Side Surface
- **154**: Side Surface
- **800**: Hose Connector
- **812**: Second Body Portion
- **816**: External Threads
- **824**: Clamping Element
- **856**: Tongue Member
- **858**: Side Surface
- **860**: First Bar
- **862**: Second Bar
- **864**: Opening
- **866**: Surface
- **1100**: Hose Connector
- **1112**: Second Body Portion
- **1124**: Clamping Element
- **1140**: Clamping Nut
- **1156**: Internal Hinges
- **1158**: First End
- **1160**: Second End
- **1162**: Surface
- **1164**: Side Surface
- **A1**: Axial Direction
- **A2**: Threading Direction
- **C1**: Clockwise Direction
- **C2**: Counter Clockwise Direction
- **D1**: Inner Diameter
- **D2**: Outer Diameter
- **D3**: Outer Diameter
- **D4**: Distance
- **L1**: Length
- **L2**: Length
- **L3**: Length
- **R**: Angle
- **R1**: Angle

## Claims

1. A hose connector (**100, 800, 1100**) comprising:
a body (**102**) including:
a first body portion (**106**); and
a second body portion (**112, 812, 1112**) disposed concentrically around the first body portion (**106**);
wherein the first body portion (**106**) and the second body portion (**112, 812, 1112**) define a gap (**114**) therebetween such that the gap (**114**) is adapted to receive a hose (**108**) therein;
a clamping element (**124, 824, 1124**) coupled to the second body portion (**112, 812, 1112**), wherein the clamping element (**124, 824, 1124**) includes a number of clamping claws (**126**); and
a clamping nut (**140,1140**) threadably coupled to the second body portion (**112, 812,1112**), the clamping nut (**140,1140**) having a tail portion (**142**), wherein in an engaged position of the clamping nut (**140, 1140**), the tail portion (**142**) is adapted to apply force on the clamping element (**124, 824,1124**);
wherein the clamping element (**124, 824, 1124**) is coupled with the second body portion (**112, 812, 1112**) in one or more of following manner:
slide on the second body portion (**112**) in an axial direction (**A1**) relative to the second body portion (**112**);
coupled with the second body portion (**812**) through a form-fit connection; and
hingedly coupled with the second body portion (**1112**);
**characterized in that:**
a distance (**D4**) defined between the clamping nut (**140, 1140**) and the clamping element (**124, 824, 1124**) is decided such that the clamping element (**124, 824, 1124**) is radially tiltable with respect to second body portion (**112, 812, 1112**),
wherein a ratio between an outer diameter (**D3**) of the clamping element (**124, 824, 1124**) and the distance (**D4**) is decided such that the clamping element (**124, 824, 1124**) is radially tiltable with respect to the second body portion (**112, 812, 1112**).

2. The hose connector (**100**) of claim 1, wherein the clamping element (**124**) is coupled to the second body portion (**112**) through a snap fit arrangement.

3. The hose connector (**100**) of any of the preceding claims, wherein the second body portion (**112**) defines a sliding surface (**118**), such that the clamping element (**124**) is slidably received on the sliding surface (**118**) thereby allowing an axial movement of the clamping element (**124**).

4. The hose connector (**100, 800, 1100**) of claim 3, wherein an inner diameter (**D1**) defined by a body (**136**) of the clamping element (**124, 824, 1124**) is slightly greater than an outer diameter second body portion (**112, 812, 1112**) at the adjacent region.

5. The hose connector (**100**) of claims 3 or 4, wherein the sliding surface (**118**) is defined between a first limiting surface (**120**) of the second body portion (**112**) and a second limiting surface (**122**) of the second body portion (**112**).

6. The hose connector (**100, 800, 1100**) of any of the preceding claims, wherein a clamping surface (**144**) of the clamping nut **(140, 1140)** is spaced apart from the clamping element (**124, 824, 1124**) when the clamping nut (**140, 1140**) is coupled with the hose connector (**100, 800, 1100**)**.**

7. The hose connector (**100, 800, 1100**) of any of the preceding claims, wherein a first gap (**148**) is defined in use between the clamping element (**124, 824, 1124**) and the hose (**108**) when the clamping nut (**140,1140**) is coupled with the hose connector (**100, 800, 1100**).

8. The hose connector (**100, 800, 1100**) of claim 1, wherein the clamping element (**124, 824,1124**) is molded on the body (**102**)**.**

9. The hose connector (**100, 800, 1100**) of claim 8, wherein an injection molding process is used for molding the clamping element (**124, 824, 1124**) on the body (**102**).

10. The hose connector (**100, 800, 1100**) of claim 9, wherein at least one of a 2-K injection molding process and an assembly injection molding process is used for molding the clamping element (**124, 824, 1124**) on the body (**102**)**.**

11. The hose connector (**100, 800, 1100**) of any of the preceding claims, wherein the clamping element (**124, 824, 1124**) and the body (**102**) are manufactured as separate components or become separate components after the molding process.

12. The hose connector (**1100**) of any of the preceding claims, wherein the clamping element (**1124**) is connected to the second body portion (**1112**) by a plurality of internal hinges (**1156**).

13. The hose connector (**100, 800, 1100**) of any of the preceding claims wherein a material of the body (**102**) is different from a material of the clamping element (**124, 824,1124**).

14. The hose connector (**100, 800, 1100**) of any of the preceding claims, wherein a length (**L2**) of the first body portion (**106**) is greater than a length (**L3**) of the clamping nut **(140, 1140)** such that the first body portion (106) is extending outward of the clamping nut (**140, 1140**) into the free space when the clamping nut (**140, 1140**) is threadably coupled to the second body portion (**112, 812, 1112**)**.**

15. The hose connector (**100, 800, 1100**) of any of the preceding claims, wherein the clamping element (**124, 824, 1124**) includes at least one teeth (**128**)**.**

## Patentansprüche

1. Ein Schlauchverbinder (100, 800, 1100), bestehend aus:
einen Körper (102), der Folgendes umfasst:
einen ersten Körperabschnitt (106); und
einen zweiten Körperabschnitt (112, 812, 1112), der konzentrisch um den ersten Körperabschnitt (106) angeordnet ist;
wobei der erste Körperabschnitt (106) und der zweite Körperabschnitt (112, 812, 1112) einen Spalt (114) dazwischenliegend definieren, so dass der Spalt (114) eingerichtet ist, um einen Schlauch (108) darin aufzunehmen;
ein Klemmelement (124, 824, 1124), das mit dem zweiten Körperabschnitt (112, 812, 1112) gekoppelt ist, wobei das Klemmelement (124, 824, 1124) eine Anzahl von Klemmklauen (126) aufweist; und
eine Spannmutter (140, 1140), die gewindemäßig mit dem zweiten Körperabschnitt (112, 812, 1112) verbunden ist, wobei die Spannmutter (140, 1140) einen Endabschnitt (142) aufweist, wobei in einer Eingriffsposition der Spannmutter (140, 1140) der Endabschnitt (142) geeignet ist, Kraft auf das Spannelement (124, 824, 1124) auszuüben;
wobei das Klemmelement (124, 824, 1124) mit dem zweiten Körperabschnitt (112, 812, 1112) auf eine oder mehrere der folgenden Arten gekoppelt ist:
auf dem zweiten Körperabschnitt (112) in einer axialen Richtung (A1) relativ zu dem zweiten Körperabschnitt (112) gleitend;
mit dem zweiten Körperabschnitt (812) durch eine formschlüssige Verbindung gekoppelt; und
gelenkig mit dem zweiten Körperabschnitt (1112) verbunden;
**dadurch gekennzeichnet, dass**:
ein zwischen der Spannmutter (140, 1140) und dem Spannelement (124, 824, 1124) definierter Abstand (D4) so festgelegt wird, dass das Spannelement (124, 824, 1124) in Bezug auf den zweiten Körperabschnitt (112, 812, 1112) radial kippbar ist,
wobei ein Verhältnis zwischen einem Außendurchmesser (D3) des Klemmelements (124, 824, 1124) und dem Abstand (D4) so festgelegt ist, dass das Klemmelement (124, 824, 1124) in Bezug auf den zweiten Körperabschnitt (112, 812, 1112) radial kippbar ist.

2. Der Schlauchverbinder (100) nach Anspruch 1, wobei das Klemmelement (124) mit dem zweiten Körperabschnitt (112) durch eine Schnappsitzanordnung gekoppelt ist.

3. Der Schlauchverbinder (100) nach einem der vorhergehenden Ansprüche, wobei der zweite Körperabschnitt (112) eine Gleitfläche (118) definiert, so dass das Klemmelement (124) verschiebbar auf der Gleitfläche (118) aufgenommen wird, wodurch eine axiale Bewegung des Klemmelements (124) ermöglicht wird.

4. Der Schlauchverbinder (100, 800, 1100) nach Anspruch 3, wobei ein Innendurchmesser (D1), der durch einen Körper (136) des Klemmelements (124, 824, 1124) definiert ist, geringfügig größer ist als ein Außendurchmesser des zweiten Körperabschnitts (112, 812, 1112) in dem angrenzenden Bereich.

5. Der Schlauchverbinder (100) nach Anspruch 3 oder 4, wobei die Gleitfläche (118) zwischen einer ersten Begrenzungsfläche (120) des zweiten Körperabschnitts (112) und einer zweiten Begrenzungsfläche (122) des zweiten Körperabschnitts (112) definiert ist.

6. Der Schlauchverbinder (100, 800, 1100) nach einem der vorhergehenden Ansprüche, wobei eine Klemmfläche (144) der Spannmutter (140, 1140) von dem Klemmelement (124, 824, 1124) beabstandet ist, wenn die Spannmutter (140, 1140) mit dem Schlauchverbinder (100, 800, 1100) verbunden ist.

7. Der Schlauchverbinder (100, 800, 1100) nach einem der vorhergehenden Ansprüche, wobei im Gebrauch ein erster Spalt (148) zwischen dem Klemmelement (124, 824, 1124) und dem Schlauch (108) definiert ist, wenn die Spannmutter (140, 1140) mit dem Schlauchverbinder (100, 800, 1100) verbunden ist.

8. Der Schlauchverbinder (100, 800, 1100) nach Anspruch 1, wobei das Klemmelement (124, 824, 1124) an den Körper (102) angeformt ist.

9. Der Schlauchverbinder (100, 800, 1100) nach Anspruch 8, wobei das Klemmelement (124, 824, 1124) in einem Spritzgießverfahren an den Körper (102) angeformt wird.

10. Der Schlauchverbinder (100, 800, 1100) nach Anspruch 9, wobei mindestens eines von einem 2-K-Spritzgießverfahren und einem Montagespritzgießverfahren zum Formen des Klemmelements (124, 824, 1124) an den Körper (102) verwendet wird.

11. Der Schlauchverbinder (100, 800, 1100) nach einem der vorhergehenden Ansprüche, wobei das Klemmelement (124, 824, 1124) und der Körper (102) als getrennte Komponenten hergestellt werden oder nach dem Formungsprozess zu getrennten Komponenten werden.

12. Der Schlauchverbinder (1100) nach einem der vorhergehenden Ansprüche, wobei das Klemmelement (1124) mit dem zweiten Körperabschnitt (1112) durch eine Vielzahl von inneren Scharnieren (1156) verbunden ist.

13. Der Schlauchverbinder (100, 800, 1100) nach einem der vorhergehenden Ansprüche, wobei sich das Material des Körpers (102) von dem Material des Klemmelements (124, 824, 1124) unterscheidet.

14. Der Schlauchverbinder (100, 800, 1100) nach einem der vorhergehenden Ansprüche, wobei eine Länge (L2) des ersten Körperabschnitts (106) größer ist als eine Länge (L3) der Spannmutter (140, 1140), so dass sich der erste Körperabschnitt (106) aus der Spannmutter (140, 1140) heraus in den freien Raum erstreckt, wenn die Spannmutter (140, 1140) mit dem zweiten Körperabschnitt (112, 812, 1112) schraubbar verbunden ist.

15. Der Schlauchverbinder (100, 800, 1100) nach einem der vorhergehenden Ansprüche, wobei das Klemmelement (124, 824, 1124) mindestens eine Verzahnung (128) aufweist.

## Revendications

1. Raccord de tuyau (100, 800, 1100) comprenant :
un corps (102) comprenant :
une première partie de corps (106) ; et
une seconde partie de corps (112, 812, 1112) disposée de manière concentrique autour de la première partie de corps (106) ;
dans lequel la première partie de corps (106) et la seconde partie de corps (112, 812, 1112) définissent un espace (114) entre elles de sorte que l'espace (114) est adapté pour recevoir un tuyau (108) à l'intérieur ;
un élément de serrage (124, 824, 1124) couplé à la seconde partie de corps (112, 812, 1112), dans lequel l'élément de serrage (124, 824, 1124) comprend un certain nombre de griffes de serrage (126) ; et
un écrou de serrage (140, 1140) couplé par filetage à la seconde partie de corps (112, 812, 1112), l'écrou de serrage (140, 1140) ayant une partie de queue (142), dans lequel dans une position engagée de l'écrou de serrage (140, 1140), la partie de queue (142) est adaptée pour appliquer une force sur l'élément de serrage (124, 824, 1124) ;
dans lequel l'élément de serrage (124, 824, 1124) est couplé à la seconde partie de corps (112, 812, 1112) d'une ou plusieurs des manières suivantes :
glisser sur la seconde partie de corps (112) dans une direction axiale (A1) par rapport à la seconde partie de corps (112) ;
couplée à la seconde partie de corps (812) par une liaison par complémentarité de forme ; et
couplée de manière articulée à la seconde partie de corps (1112) ;
**caractérisé en ce que** :
une distance (D4) définie entre l'écrou de serrage (140, 1140) et l'élément de serrage (124, 824, 1124) est décidée de telle sorte que l'élément de serrage (124, 824, 1124) est inclinable radialement par rapport à la seconde partie de corps (112, 812, 1112),
dans lequel un rapport entre un diamètre extérieur (D3) de l'élément de serrage (124, 824, 1124) et la distance (D4) est décidé de telle sorte que l'élément de serrage (124, 824, 1124) est inclinable radialement par rapport à la seconde partie de corps (112, 812, 1112).

2. Raccord de tuyau (100) selon la revendication 1, dans lequel l'élément de serrage (124) est couplé à la seconde partie de corps (112) par un agencement par encliquetage.

3. Raccord de tuyau (100) selon l'une quelconque des revendications précédentes, dans lequel la seconde partie de corps (112) définit une surface de glissement (118), de sorte que l'élément de serrage (124) est reçu de manière coulissante sur la surface de glissement (118), permettant ainsi un mouvement axial de l'élément de serrage (124).

4. Raccord de tuyau (100, 800, 1100) selon la revendication 3, dans lequel un diamètre intérieur (D1) défini par un corps (136) de l'élément de serrage (124, 824, 1124) est légèrement supérieur à un diamètre extérieur de la seconde partie de corps (112, 812, 1112) au niveau de la région adjacente.

5. Raccord de tuyau (100) selon les revendications 3 ou 4, dans lequel la surface de glissement (118) est définie entre une première surface de limitation (120) de la seconde partie de corps (112) et une seconde surface de limitation (122) de la seconde partie de corps (112).

6. Raccord de tuyau (100, 800, 1100) selon l'une quelconque des revendications précédentes, dans lequel une surface de serrage (144) de l'écrou de serrage (140, 1140) est espacée de l'élément de serrage (124, 824, 1124) lorsque l'écrou de serrage (140, 1140) est couplé au raccord de tuyau (100, 800, 1100).

7. Raccord de tuyau (100, 800, 1100) selon l'une quelconque des revendications précédentes, dans lequel un premier espace (148) est défini en utilisation entre l'élément de serrage (124, 824, 1124) et le tuyau (108) lorsque l'écrou de serrage (140, 1140) est couplé au raccord de tuyau (100, 800, 1100).

8. Raccord de tuyau (100, 800, 1100) selon la revendication 1, dans lequel l'élément de serrage (124, 824, 1124) est moulé sur le corps (102).

9. Raccord de tuyau (100, 800, 1100) selon la revendication 8, dans lequel un procédé de moulage par injection est utilisé pour mouler l'élément de serrage (124, 824, 1124) sur le corps (102).

10. Raccord de tuyau (100, 800, 1100) selon la revendication 9, dans lequel au moins un procédé de moulage par injection 2-K et un procédé de moulage par injection d'assemblage sont utilisés pour mouler l'élément de serrage (124, 824, 1124) sur le corps (102).

11. Raccord de tuyau (100, 800, 1100) selon l'une quelconque des revendications précédentes, dans lequel l'élément de serrage (124, 824, 1124) et le corps (102) sont fabriqués en tant que composants séparés ou deviennent des composants séparés après le processus de moulage.

12. Raccord de tuyau (1100) selon l'une quelconque des revendications précédentes, dans lequel l'élément de serrage (1124) est relié à la seconde partie de corps (1112) par une pluralité de charnières internes (1156).

13. Raccord de tuyau (100, 800, 1100) selon l'une quelconque des revendications précédentes, dans lequel un matériau du corps (102) est différent d'un matériau de l'élément de serrage (124, 824, 1124).

14. Raccord de tuyau (100, 800, 1100) selon l'une quelconque des revendications précédentes, dans lequel une longueur (L2) de la première partie de corps (106) est supérieure à une longueur (L3) de l'écrou de serrage (140, 1140) de sorte que la première partie de corps (106) s'étend vers l'extérieur de l'écrou de serrage (140, 1140) dans l'espace libre lorsque l'écrou de serrage (140, 1140) est couplé par filetage à la seconde partie de corps (112, 812, 1112).

15. Raccord de tuyau (100, 800, 1100) selon l'une quelconque des revendications précédentes, dans lequel l'élément de serrage (124, 824, 1124) comprend au moins une dent (128).
